# EUROPEAN PATENT SPECIFICATION

(11) **EP 1 762 498 B1**
(45) Date of publication and mention of the grant of the patent: **26.11.2014**
(21) Application number: 06380190.6
(22) Date of filing: 06.07.2006
(51) Int. Cl.: B62B 3/16, A45C 13/26, A45C 3/04, A45C 5/14, B62B 5/06

(54) **Drivable shopping basket**
Fahrbarer Einkaufskorb
Panier-poussette des courses

(30) Priority: 13.07.2005 ES 200501618 U; 13.07.2005 ES 200501620 U; 04.10.2005 ES 200502158 U
(43) Date of publication of application: 14.03.2007
(73) Proprietor: SP BERNER PLASTIC GROUP, S.L., 46960 Aldaia (Valencia) (ES)
(72) Inventor: Escarpa Gil, Julian, 46960 Aldaia (Valencia) (ES)
(74) Representative: Ungria López, Javier

(56) References cited:
- EP-A1- 1 407 956
- US-A- 4 724 681
- US-A- 4 819 827

## Description

### OBJECT OF THE INVENTION

The invention refers to a basket of the kind used in shopping, fitted with a main handle which allows it to be transported in the elevated position and a secondary handle allowing it to be transported by pulling the basket along on wheels when the weight to bear is excessive.

It is an object of the invention to improve the structure and union of the secondary handle to the main body of the basket and all this such that the basket can be stacked vertically.

Another object of the invention is the incorporation of stops which limit the folding of the secondary handle towards the outside, according to a first position in which said secondary handle is arranged in an inclined position in order to facilitate the pulling, and according to a second position in which the secondary handle is arranged approximately horizontally.

It is also an object of the invention to provide a new base structure for the main body of the basket in order to permit containers and bottles, mainly those for liquid products, to remain in the vertical position, in such a way that the new structure of the base forces these containers to incline and remain resting against the side walls of the main body of the basket, keeping them stable in the vertical position during displacement.

### PRIOR ART OF THE INVENTION

There are various baskets known in the state of the art which incorporate wheels for transportation by way of a trolley, for which purpose they incorporate a main handle permitting them to be carried held in an elevated position and they are also provided with a secondary handle intended for transport of the basket by pulling it along on wheels. In this regard, mention can be made of American Patent US 1689448 or European patent EP 1407956, in which a basket is described that can be carried held in an elevated position or pulled along on its lower wheels like a trolley, the secondary or pulling handle consisting of a U-shaped body which is coupled to two points on the larger sides of the basket.

In neither of the two cases is provision made for the pulling handle to be coupled to a single side face of the basket, and also this configuration only permits folding of the pulling handle in a single plane, which makes it difficult to transport the basket when pulling it along on wheels, since it does not allow the pulling handle to be able to rotate in different directions.

Also, the baskets of the state of the art present the drawback that their bases are flat, which in practice means that the articles placed in them easily topple over and fall towards the centre of the base, a problem that is accentuated in baskets provided with wheels which undergo more sudden movements than those that are purely hand-held. This configuration first of all makes the contents of the basket untidy, with the volume available for filling being reduced due to that untidiness, and also if the container falls it becomes hit and there is the possibility of breakage, particularly in the case of glass containers.

### DESCRIPTION OF THE INVENTION

In order to solve the drawbacks and achieve the objectives stated above, the invention has developed a novel shopping basket comprising a main body, able to incorporate wheels for being pulled along, and which also includes a main handle for carrying in the elevated position, the ends of which are coupled in the middle zone of the side edges of the main body, in such a way that it can be folded towards one end or another of the main body and rest on some first projections provided in the edge of the same without hindering its opening. The invention furthermore incorporates a secondary coupled handle for pulling, which in its folded position remains supported on some second projections provided in the edge of the main body without hindering its opening; and is characterised in that the secondary handle comprises a piece in the form of a frame which defines a contour closed in its perimeter, one of whose lesser sides is coupled in one of the lesser sides of the main body.

In one embodiment of the invention, provision is made so that the coupling of the secondary handle, in one of the lesser sides of the main body, is materialised by means of a hinge moulded in the secondary handle and in a lesser side of the main body, in such a way that the operation of fastening the secondary handle to the main body is considerably simplified since it is only necessary to locate the part of the hinge for the secondary handle so that it becomes a continuation of the part of the hinge of the main body and then to join them by means of a pin.

The perimeter of the secondary handle is of greater length than the perimeter of the opening of the main body in order to prevent it from hindering that opening.

The invention also provides that the coupling of the secondary handle in one of the lesser sides of the main body comprises a rotation element for the handle in different directions, as in the case of a swivel joint or universal joint, and this structure presents the advantage that it simplifies the assembly of the secondary handle since this is done just on one of the sides of the main body, and also, as the structure of the secondary handle is closed in its perimeter, this grants a more rigid and resistant configuration.

Moreover, by allowing the coupling of the secondary handle in different planes, the basket is provided with a more ergonomic use since, when pulling the secondary handle, this adapts itself to minor changes of direction made by the user both with his or her hand and in displacement.

In another embodiment of the invention, the coupling comprises an extension provided in the lesser side of the main body, which defines a recess via which travels, and in which is housed with the possibility of rotation, a coupling shaft materialised in one section of the actual secondary handle. Consequently, in this embodiment the secondary handle is remains housed in the recess.

This embodiment is complemented with the incorporation of a cover which closes the recess in order to retain the coupling shaft, and consequently retain the secondary handle.

In order to permit the coupling shaft to be able to travel along the recess, provision is made so that one of the lesser faces of that recess incorporates separate openings via which the coupling shaft is located and guided.

In this case, the invention also provides for the incorporation of stops for limiting the angle of folding of the secondary handle towards the outside, for which the shaft is provided with at least one complementary lug made in the cover such that, when the secondary handle is folded towards the outside, the stop of the shaft makes contact with the stop of the secondary handle, thus limiting its travel.

In one variant, at least one lug of the shaft is provided in correspondence with at least one lug of the cover in such a way that they are located in a position in which the folding of the secondary handle is limited to an oblique position in order to facilitate the carrying and pulling of the basket. In this case, both lugs present a configuration such that, when they stop against each other, with the secondary handle remaining located in an oblique position, by exerting a certain folding force downwards, the lug of the shaft exceeds that of the cover and the angle of folding of the secondary handle towards the outside can then be extended.

The invention provides that the shaft can include two lugs located in correspondence with two lugs provided in the cover, in such a way that that the four lugs define a folding stop for the secondary handle towards the outside, which is located in an approximately horizontal position, with which the handle is prevented from making contact with the ground even if it slips from the user's hands after exceeding the stop keeping the secondary handle in the oblique position.

Provision has also been made for the recess to include transverse reinforcement ribs provided with openings in correspondence with the openings of the lesser faces of the recess, via which the shaft of the secondary handle runs and is guided.

The cover is provided with at least one guiding and retaining rib for that shaft, which is complementary to the openings of the side faces and/or of the reinforcement ribs included in the recess.

It is also provided for the shaft to have at least one perimetric projection preventing the longitudinal displacement of the shaft with respect to the recess, since said perimetric projection stops against some of the lugs and/or ribs of the stops and /or recess.

In another embodiment of the invention, provision is made for the base of the main body to comprise a structure with a central elevation which decreases and becomes reduced towards the side walls, in such a way that the base has to rise up towards the centre thereof and descends and becomes reduced as we approach the side walls of the main body.

The structure of the base normally presents a curvature that can be generated in the longitudinal or transverse direction, or a combination of both, and a domed base can also be obtained.

Moreover, the base can also be formed from different inclined planes converging in elevation view towards the centre of the base of the main body.

This structure has the great advantage that, for example, when a bottle is placed in the bottom, it is forced to incline and rest against one of the side walls of the main body, remaining stable in a slightly inclined position with respect to the vertical and resting against that side wall, in such a way that even during transport and/or pulling of the basket, the bottle remains resting against the side wall, without toppling over towards the centre of the base, which is what happens with conventional baskets where the base is flat and not capable of maintaining the stability of the bottle.

Below, in order to facilitate a better understanding of this specification and forming an integral part thereof, a series of figures are attached in which, by way of illustration only and not limiting, the object of the invention has been represented.

### BRIEF DESCRIPTION OF THE FIGURES

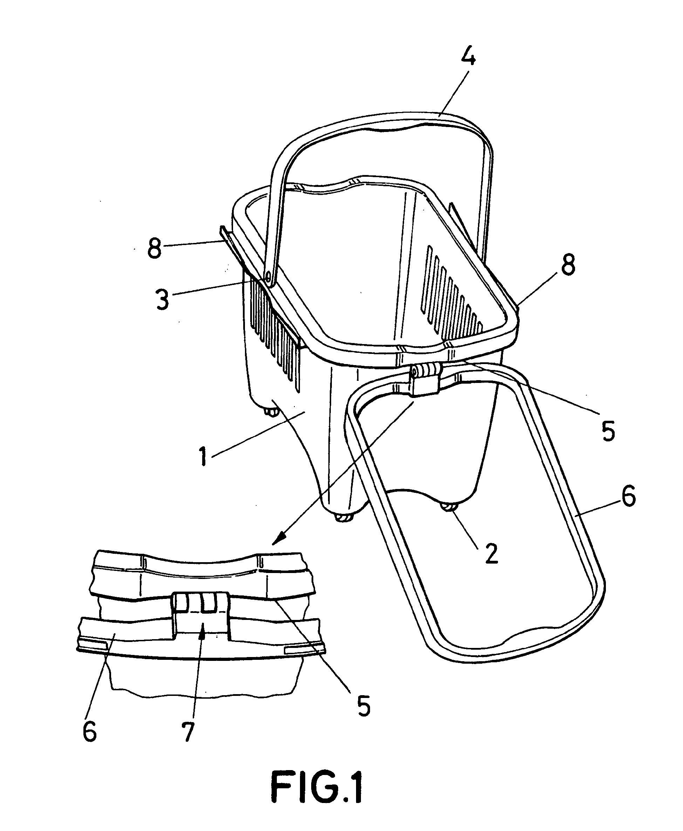

**Figure 1****.-** Shows a perspective view of the inventive basket with the secondary pulling handle in its position of use for pulling the basket. Also shown is a possible embodiment of the coupling of the secondary handle in one of the lesser sides of the main body.

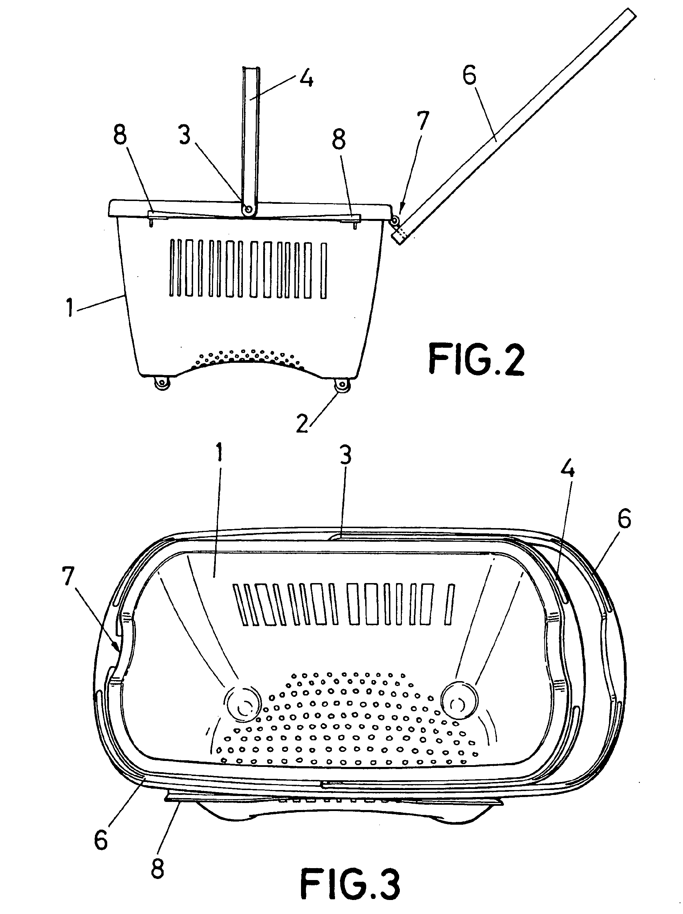

**Figure 2****.-** Shows a profile view of the basket of the previous figure.
**Figure 3****.-** Shows a plan view of the basket with the main handle and with the secondary handle in their folded position on the opening of the basket without disturbing that opening, thus making it possible to stack them vertically.
**Figure 4****.-** Shows a partial view in exploded perspective of another embodiment of the coupling device of the secondary handle.

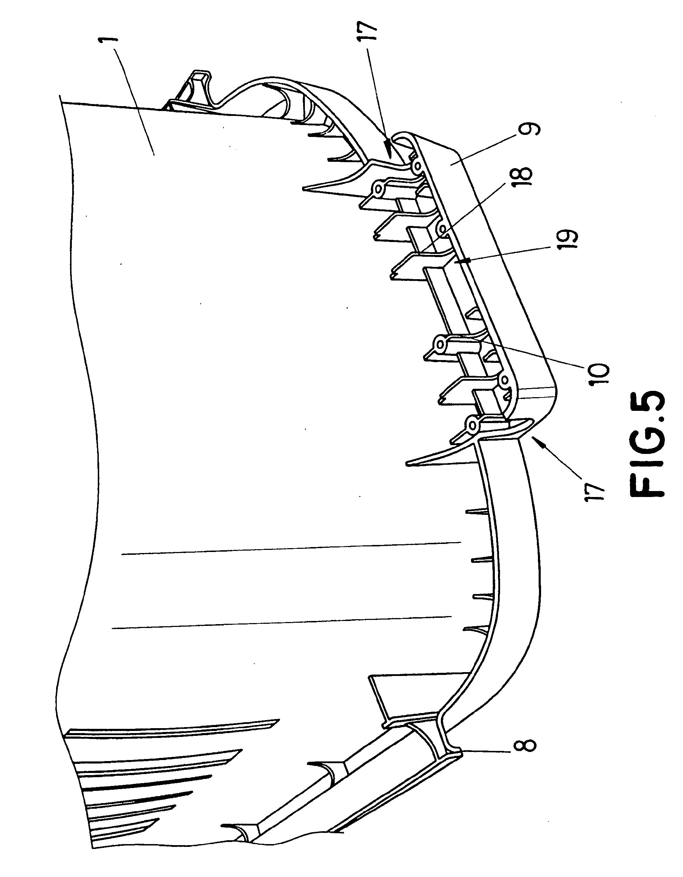

**Figure 5****.-** Shows a lower view of the recess of the previous figure in which the secondary handle has been provided and is guided.

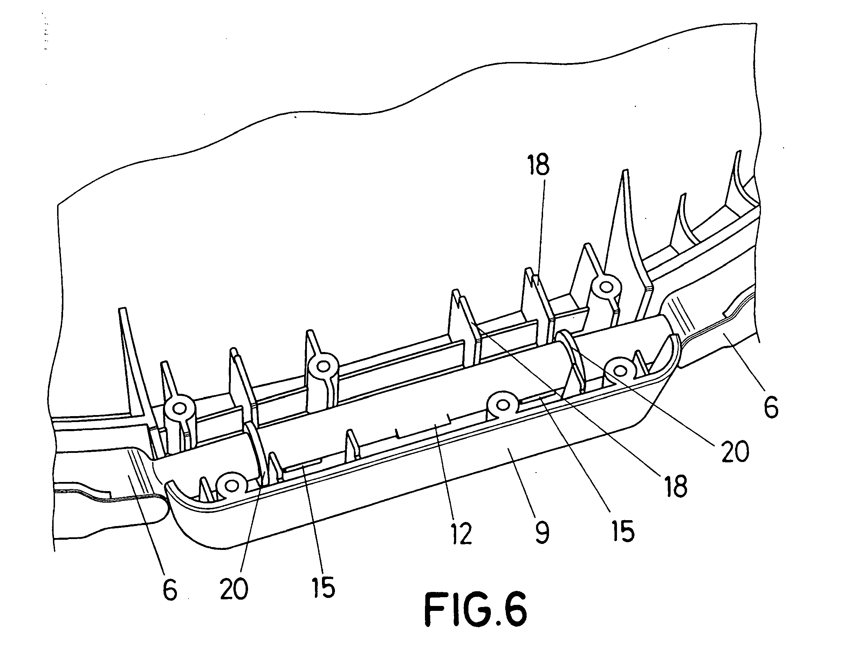

**Figure 6****.-** Shows an equivalent view to the above figure in which the folding shaft of the recess has been incorporated.

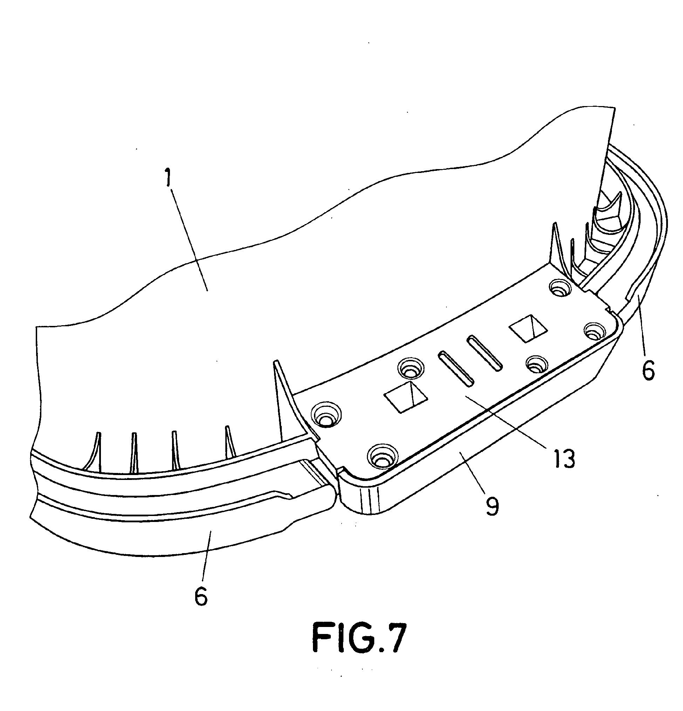

**Figure 7****.-** Shows an equivalent view to the above figure in which the coupling device has been completed with the incorporation of the cover carrying out the retention of the secondary handle.
**Figure 8****.-** Shows a side view of the complete basket of the embodiments of figures 4 to 7, in a position in which the stops provided in the cover and coupling shaft keep the secondary handle in an inclined position.
**Figure 9****.-** Shows an equivalent view to the above figure in which the stops keep the secondary handle in an approximately horizontal position.
**Figure 10****.-** Shows a sectioned elevation view of another example of the inventive basket in which a new base has been incorporated.
**Figure 11****.-** Shows a sectioned profile view of the basket of the above figure.
**Figure 12****.-** Shows an upper plan view of the basket of figures 10 and 11.

### DESCRIPTION OF THE PREFERRED MANNER OF EMBODIMENT

Given below is a description of the invention based on the figures commented upon above.

The inventive basket comprises a main body 1 which includes in its lower part some wheels 2 for displacement by pulling; the main body 1 having in the middle zone of its side edges some coupling points 3 which link with a main handle 4, in such a way that the latter can be folded towards one end or another on some first projections 5 existing in the edge of the main body 1, with which neither of the two positions for folding of the main handle 4 interferes with the upper opening of the main handle 1, which is left totally free.

The basket also comprises a secondary handle 6 for transport by pulling, which consists of a piece in the form of a frame which defines a contour closed in its perimeter, one of whose lesser sides is coupled to one of the lesser sides of the main body 1 by means of a hinge 7 which joins the middle zone of the lesser side of the secondary handle 6 with the lesser side of the main body 1.

In another inventive embodiment, the coupling is made by means of a swivel joint or universal joint, not represented in the figures, in such a way that rotation of the secondary handle 6 is permitted in different directions, which considerably facilitates displacement of the basket on its wheels 2 by means of pulling since, when the basket is pulled via the secondary handle 6, this handle adapts itself to the changes of direction made by the user when turning in different directions as he or she pulls the basket.

The secondary handle 6 is guided and supported in its folding positions around the opening of the main body 1 in some second projections 8 of larger size than the first projections 5, described above, and which are provided in the sides of the edges of the opening of the main body 1.

In either of the two positions of the secondary handle 6, the latter is located laterally with the main handle 4 and laterally with opening of the main body 1, in such a way that said opening is left totally clear for permitting the stacking of different baskets in the vertical direction.

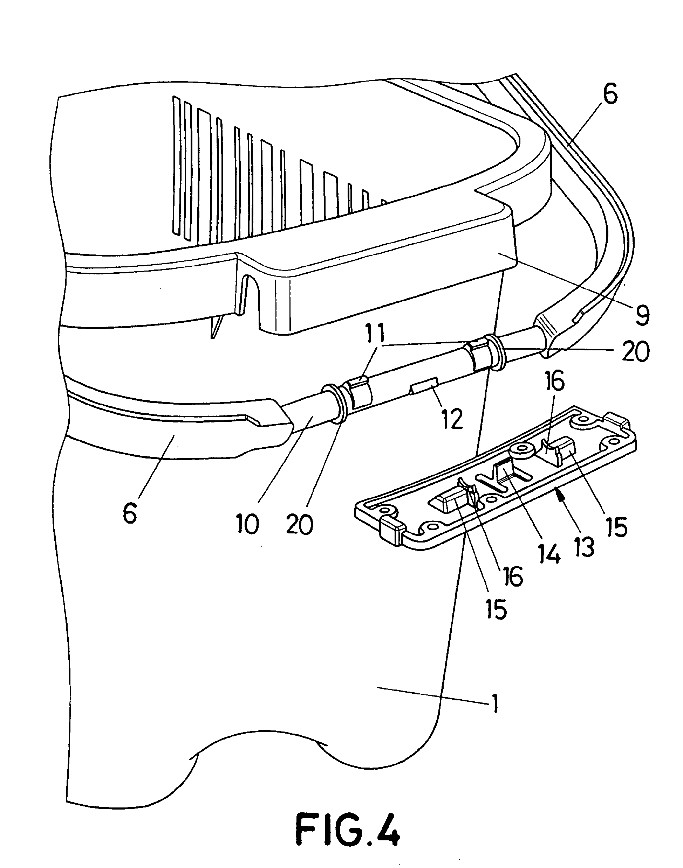

Figure 4 shows another example of embodiment in which the secondary handle 6 also consists of a piece in the form of a frame defining a contour closed in its perimeter, one of whose lesser sides presents a narrowing defined by a cylindrical section which constitutes a coupling shaft 10 housed in an extension provided in one of the lesser sides of the main body 1 and which defines a recess 9 , for which its side walls are provided with openings 17 via which runs the coupling shaft 10.

Inside the recess 9, provision has been made for some transverse ribs 18 which are provided with openings made in correspondence with the openings 17 of the side faces of the recess 9, in order to permit the housing and guiding of the coupling shaft 10 inside the recess 9.

In this embodiment, provision has been made for the incorporation of a cover 13 by means of which the coupling shaft 10 is retained in the recess 9. The cover 13 is fastened to the recess 9 by means of screws (not represented in the figures).

The coupling shaft 10 is provided with two side lugs 11 made in correspondence with two side lugs 15 made in the cover 13 and, moreover, said coupling shaft 10 incorporates a central lug 12 located in correspondence with a central lug 12 of the cover 13, the purpose of which will be explained later on.

In order to prevent the longitudinal displacement of the coupling shaft 10 inside the recess 9, provision has been made for said shaft 10 to be provided with perimetric projections 20 which stop against one of the transverse ribs 18, so that the folding shaft 10 is kept retained and guided inside the recess 9 without it being able to be displaced longitudinally inside it.

In this case, the secondary handle 6 is also folded on the opening of the main body 1, on the second projections 8 of larger size than the first projections 5 supporting the main handle 4.

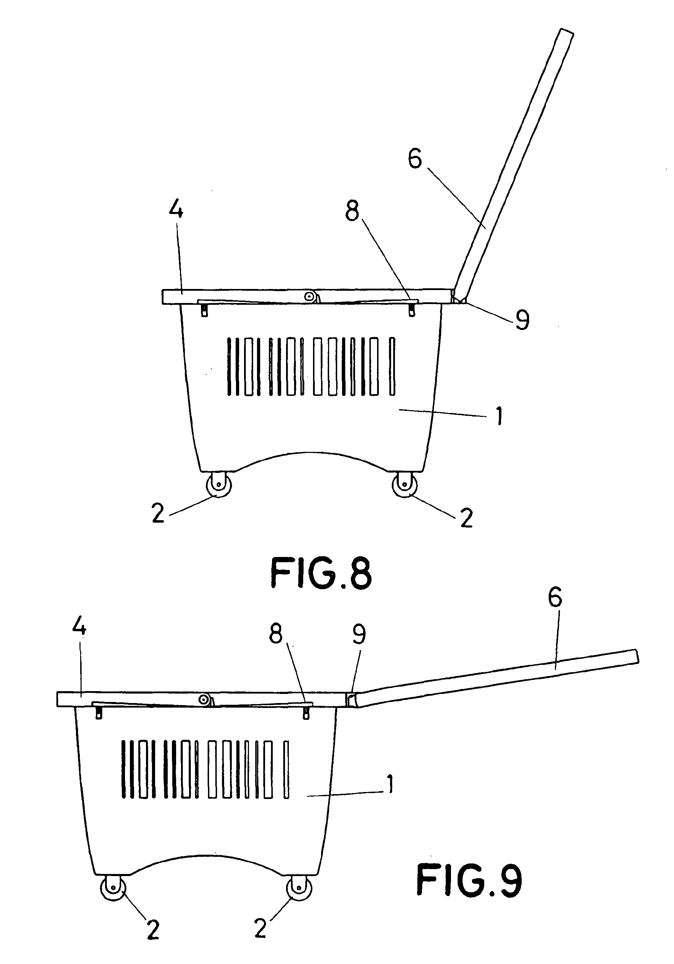

The configuration described permits the secondary handle 6 to be folded towards the outside in such a way that the shaft 10 swivels inside the recess 9 until the central lug 12 makes contact with a central lug 14 provided in the cover 13. At this point it can be stated that the lug 12 of the coupling shaft 10 presents an approximately triangular cross-section and the lug 14 of the cover 13 consists of a partition, so that when the lug 12 stops against 14, the secondary handle 6 becomes retained in an oblique position (figure 8) which facilitates pulling of the basket, and in such a way that with the secondary pulling handle 6 being in this position, if a downward force is applied, the lug 12 of the coupling shaft 10 exceeds the lug 14 and the secondary handle 6 can carry on making an angular displacement until the lugs 11 of the shaft 10 make contract with the lugs 15 of the cover 7 (figure 9), in which position the secondary pulling handle 6 remains located in an approximately horizontal position. The configuration of the projections 11 and 15 prevent the former from being able to exceed the latter even if a certain force is exerted on the secondary handle 6, in such a way that it is prevented from reaching the point of touching the ground.

The cover 13 comprises two ribs 16 which are adapted to the shape of the coupling shaft 10 in order to facilitate the retention and guiding of that shaft 10 inside the recess 9 and which are complemented with openings 17 and 19 already described above.

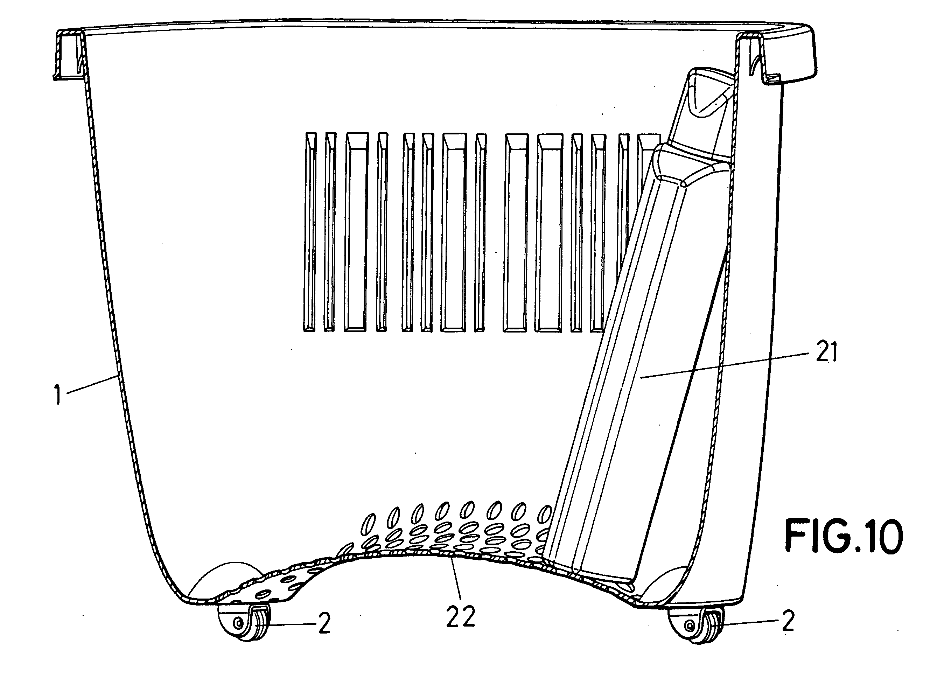

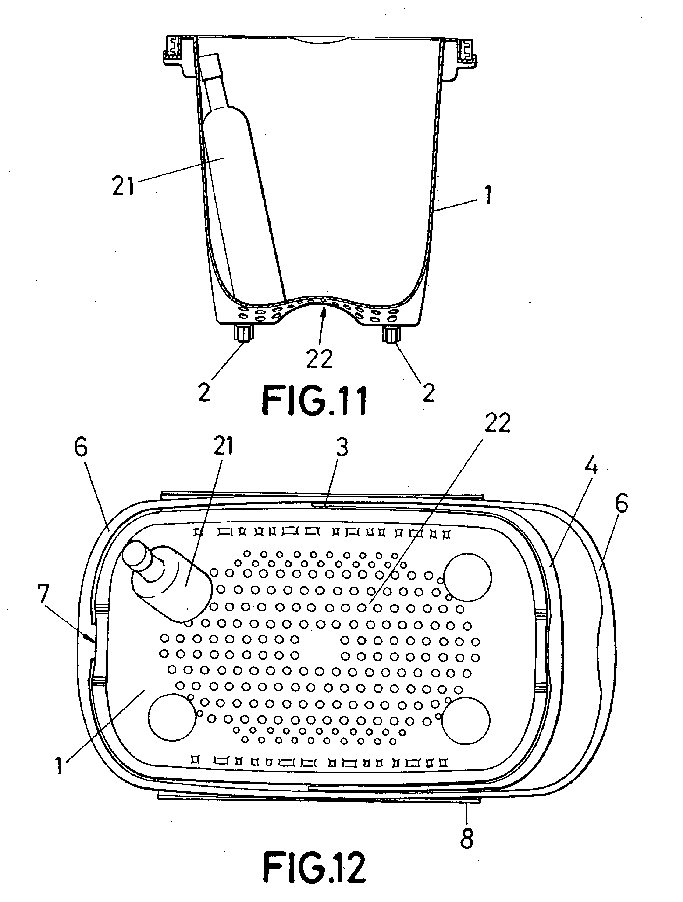

Figures 10 and 11 show the main body 1 sectioned in order to permit the configuration of its base 22 to be described, which comprises a centred elevation which decreases and becomes reduced as we approach the side walls of the main body 1. In this way, some shopping products, such as bottles 21 and similar, will be kept stable by resting on the base 22 and being supported against the side walls of the main body 1. The base 22 can present structures such as:
- An arched structure with a curvature descending towards the edges opposing that base.
- A structure comprising a domed curvature descending towards the said base in its union with the side walls.
- A structure with at least two inclined planes converging in elevation towards a central area of the base.
- A structure comprising a combination of two curvatures perpendicular to each other which descend and become reduced from the central area of the base towards its side edges.

## Claims

1. **SHOPPING BASKET** comprising a main body (1), wheels (2) for transportation by pulling, a main handle (4) for transportation in elevation which folds towards the edge of the main body (1) without hindering its opening, a secondary coupled pulling handle (6) which in its folded position remains supported on some second projections (8) provided in the edge of the main body (1) without hindering its opening; **characterised in that** the secondary handle (6) comprises a piece in the form of a frame which defines a contour closed in its perimeter, one of whose lesser sides is coupled in one of the lesser sides of the main body (1).

2. **SHOPPING BASKET,** according to claim 1, **characterised in that** the coupling of the secondary handle (6) in one of the lesser sides of the main body (1) comprises a hinge (7) moulded in the secondary handle (6) and in the side of the main body (1).

3. **SHOPPING BASKET,** according to claim 1, **characterised in that** the coupling of the secondary handle (6) in one of the lesser sides of the main body (1) comprises a rotation element for the handle in different directions.

4. **SHOPPING BASKET,** according to claim 3, **characterised in that** rotation element of the secondary handle (6) in different directions is selected from a swivel joint and universal joint.

5. **SHOPPING BASKET,** according to claim 1, **characterised in that** the coupling of the secondary handle (6) in one of the lesser sides of the main body (1) comprises an extension provided in one of the lesser sides of the main body (1), which defines a recess (9) via which travels, and in which is housed with the possibility of rotation, a coupling shaft (10) materialised in one section of the actual secondary handle (6).

6. **SHOPPING BASKET,** according to claim 5, **characterised in that** the coupling of the secondary handle (6) in one of the lesser sides of the main body (1) comprises a cover (13) which closes the recess (9) for retaining the coupling shaft (10) of the secondary handle (2).

7. **SHOPPING BASKET,** according to claim 6, **characterised in that** the coupling shaft (10) comprises at least one lug (11, 12) complementary to at least one lug (14, 15) provided in the cover (13) for limiting the angle of folding of the secondary handle (6) towards the outside.

8. **SHOPPING BASKET,** according to claim 7, **characterised in that** at least the lug (12) of the coupling shaft (10) and at least the corresponding lug (14) of the cover (13) are located in a position that limits the folding of the secondary handle (6) to an oblique position; and moreover they present a configuration which, when the secondary handle (6) is in the oblique position, by exerting a certain folding force downwards, the lug (12) of the coupling shaft (10) exceeds the lug (14) of the cover (13) in order to permit the secondary handle (6) to continue being folded towards the outside.

9. **SHOPPING BASKET,** according to claims 7 or 8, **characterised in that** the coupling shaft (10) includes two lugs (11) located in correspondence with two lugs (15) provided in the cover (13), in order to define a folding stop for the secondary handle (6) towards the outside in an approximately horizontal position.

10. **SHOPPING BASKET,** according to claims 5 to 10, **characterised in that** the recess (9) includes separate openings (17) in its lesser faces via which the coupling shaft (10) runs and is guided.

11. **SHOPPING BASKET,** according to claim 10, **characterised in that** the recess (9) comprises transverse reinforcement ribs (18) provided with openings (19) located in correspondence with the openings (17) of the lesser faces of the recess (9).

12. **SHOPPING BASKET,** according to claim 10, **characterised in that** the cover (13) is provided with at least one guiding and retaining rib (16) for said coupling shaft (10), complementary to some elements selected from among openings (17, 19) of the side faces, the transverse reinforcement ribs (18) and combination thereof.

13. **SHOPPING BASKET,** according to claim 12, **characterised in that** the coupling shaft (10) comprises at least one perimetric projection (20) which stops against an element selected from among the lugs (14, 15) of the cover (13), the ribs (16) of the cover (13), the recess (9), and combination thereof in order to prevent the longitudinal displacement of the coupling shaft (10) in the recess (9).

14. **SHOPPING BASKET,** according to any of the preceding, **characterised in that** the perimeter of the secondary handle (6) is of greater length than the perimeter of the opening of the main body (1).

15. **SHOPPING BASKET,** according to claim 1, **characterised in that** the base (22) of the main body (1) comprises a central elevation which decreases and becomes reduced towards the side walls, in order to force the products (21) contained in the base of the main body to incline and rest against the side walls, keeping them stable.

16. **SHOPPING BASKET,** according to claim 15, **characterised in that** the elevation comprises an arching with a descending curvature towards the opposing edges of the base (22).

17. **SHOPPING BASKET,** according to claim 15, **characterised in that** the elevation comprises a domed curvature descending towards the edges of that base (22) in its union with the side walls.

18. **SHOPPING BASKET,** according to claim 15, **characterised in that** the elevation comprises at least two inclined planes in elevation converging towards a central area of the base (22).

19. **SHOPPING BASKET,** according to claim 15, **characterised in that** the elevation comprises a combination of two curvatures perpendicular to each other which descend and become reduced from a central area of the base (22) towards its side walls.

## Patentansprüche

1. Einkaufskorb, der einen Hauptkörper (1), Räder (2) zum Transportieren mittels Ziehen, einen Hauptgriff (4) zum Transportieren mittels Anheben, der an den Rand des Hauptkörpers (1) geklappt wird, ohne seine Öffnung zu versperren, einen kombinierten zweiten Ziehgriff (6), der in seiner eingeklappten Position auf zweiten Vorsprüngen (8) aufliegt, die sich am Rand des Hauptkörpers (1) befinden, ohne seine Öffnung zu versperren, **dadurch gekennzeichnet, dass** der zweite Griff (6) ein Teil in Form eines Rahmens umfasst, der eine Kontur hat, die an ihrem Umfang geschlossen ist, wobei eine seiner kürzeren Seiten mit einer der kürzeren Seiten des Hauptkörpers (1) verbunden ist.

2. Einkaufskorb nach Anspruch 1, **dadurch gekennzeichnet, dass** die Verbindung des zweiten Griffs (6) mit einer der kürzeren Seiten des Hauptkörpers (1) ein Scharnier (7) umfasst, das in dem zweiten Griff (6) und in der Seite des Hauptkörpers (1) geformt ist.

3. Einkaufskorb nach Anspruch 1, **dadurch gekennzeichnet, dass** die Verbindung des zweiten Griffs (6) mit einer der kürzeren Seiten des Hauptkörpers (1) ein Element zum Drehen des Griffs in verschiedene Richtungen umfasst.

4. Einkaufskorb nach Anspruch 3, **dadurch gekennzeichnet, dass** das Element zum Drehen des zweiten Griffs (6) in verschiedenen Richtungen aus einem Schwenkgelenk und einem Universalgelenk ausgewählt wird.

5. Einkaufskorb nach Anspruch 1, **dadurch gekennzeichnet, dass** die Verbindung des zweiten Griffs (6) mit einer der kürzeren Seiten des Hauptkörpers (1) einen Ansatz an einer der kürzeren Seiten des Hauptkörpers (1) umfasst, der eine Aussparung (9) aufweist, über die sich eine Verbindungswelle (10) bewegt, die in einem Abschnitt des eigentlichen zweiten Griffs (6) ausgebildet ist, und in der diese drehbar aufgenommen ist.

6. Einkaufskorb nach Anspruch 5, **dadurch gekennzeichnet, dass** die Verbindung des zweiten Griffs (6) mit einer der kürzeren Seiten des Hauptkörpers (1) eine Abdeckung (13) umfasst, die die Aussparung (9) verschließt, um die Verbindungswelle (10) des zweiten Griffs (2) zu halten.

7. Einkaufskorb nach Anspruch 6, **dadurch gekennzeichnet, dass** die Verbindungswelle (10) wenigstens eine Nase (11, 12) umfasst, die komplementär zu wenigstens einer Nase (14, 15) ist, die sich in der Abdeckung (13) befindet, um einen Winkel zum Klappen des zweiten Griffs (6) nach außen zu begrenzen.

8. Einkaufskorb nach Anspruch 7, **dadurch gekennzeichnet, dass** sich die wenigstens eine Nase (12) der Verbindungswelle (10) und wenigstens die entsprechende Nase (14) der Abdeckung (13) an einer Position befinden, durch die Klappen des zweiten Griffs (6) auf eine schräge Position beschränkt wird, und sie des Weiteren so aufgebaut sind, dass, wenn sich der zweite Griff (2) in der schrägen Position befindet, indem eine bestimmte Kraft zum Klappen nach unten ausgeübt wird, sich die Nase (12) der Verbindungswelle (10) über die Nase (14) der Abdeckung (13) hinaus bewegt, um zuzulassen, dass der zweite Griff (6) weiter nach außen geklappt wird.

9. Einkaufskorb nach Anspruch 7 oder 8, **dadurch gekennzeichnet, dass** die Verbindungswelle (10) zwei Nasen (11) enthält, die in Entsprechung zu zwei Nasen (15) angeordnet sind, die sich an der Abdeckung (13) befinden, so dass das Klappen des zweiten Griffs (6) nach außen an einer annähernd horizontalen Position zum Halten gebracht wird.

10. Einkaufskorb nach Anspruch 5 bis 10, **dadurch gekennzeichnet, dass** die Aussparung (9) separate Öffnungen (17) an ihren kürzeren Flächen enthält, durch die die Verbindungswelle (10) verläuft und geführt wird.

11. Einkaufskorb nach Anspruch 10, **dadurch gekennzeichnet, dass** die Aussparung (9) Verstärkungs-Querrippen (18) umfasst, die mit Öffnungen (19) versehen sind, die in Entsprechung zu den Öffnungen (17) der kürzeren Flächen der Aussparung (9) angeordnet sind.

12. Einkaufskorb nach Anspruch 10, **dadurch gekennzeichnet, dass** die Abdeckung (13) mit wenigstens einer Führungs-und-Halte-Rippe (16) für die Verbindungswelle (10) versehen ist, die komplementär zu Elementen ist, die aus Öffnungen (17, 19) der Seitenflächen, den Verstärkungs-Querrippen (18) und einer Kombination derselben ausgewählt werden.

13. Einkaufskorb nach Anspruch 12, **dadurch gekennzeichnet, dass** die Verbindungswelle (10) wenigstens einen Umfangsvorsprung (20) umfasst, der an einem Element anschlägt, das aus den Nasen (14, 15) der Abdeckung (13), den Rippen (16) der Abdeckung (13), der Aussparung (9) und einer Kombination daraus gebildet wird, um die Verschiebung der Verbindungswelle (10) in der Aussparung (9) in Längsrichtung zu verhindern.

14. Einkaufskorb nach einem der vorangehenden Ansprüche, **dadurch gekennzeichnet, dass** der Umfang des zweiten Griffs (6) länger ist als der Umfang der Öffnung des Hauptkörpers (1).

15. Einkaufskorb nach Anspruch 1, **dadurch gekennzeichnet, dass** der Boden (22) des Hauptkörpers (1) eine mittige Erhebung umfasst, die zu den Seitenwänden hin abnimmt und flacher wird, so dass sich auf dem Boden des Hauptkörpers befindliche Erzeugnisse (21) zwangsweise neigen und an den Seitenwänden anliegen und stabil gehalten werden.

16. Einkaufskorb nach Anspruch 15, **dadurch gekennzeichnet, dass** die Erhebung eine Wölbung mit einer Krümmung umfasst, die zu den einander gegenüberliegenden Rändern des Bodens (22) hin abnimmt.

17. Einkaufskorb nach Anspruch 15, **dadurch gekennzeichnet, dass** die Erhebung eine konvexe Krümmung umfasst, die zu den Rändern des Bodens (22) an ihrem Übergang zu den Seitenwänden abfällt.

18. Einkaufskorb nach Anspruch 15, **dadurch gekennzeichnet, dass** die Erhebung wenigstens zwei erhöhte geneigte Ebenen umfasst, die zu einem Mittelbereich des Bodens (22) hin zusammenlaufen.

19. Einkaufskorb nach Anspruch 15, **dadurch gekennzeichnet, dass** die Erhebung eine Kombination aus zwei Krümmungen umfasst, die senkrecht zueinander sind, nach unten abfallen und von einem Mittelbereich des Bodens (22) zu seinen Seitenwänden hin abnehmen.

## Revendications

1. Panier à provisions comprenant un corps principal (1), des roues (2) pour le transport par traction, une poignée principale (4) pour le transport en élévation qui se plie vers le bord du corps principal (1) sans gêner son ouverture, une poignée de traction couplée secondaire (6) qui, dans sa position pliée, reste supportée sur certaines secondes saillies (8) prévues dans le bord du corps principal (1) sans gêner son ouverture ; **caractérisé en ce que** la poignée secondaire (6) comprend une pièce se présentant sous la forme d'un bâti qui définit un contour fermé dans son périmètre, dont l'un de ses petits côtés est couplé à l'un des petits côtés du corps principal (1).

2. Panier à provisions selon la revendication 1, **caractérisé en ce que** le couplage de la poignée secondaire (6) dans l'un des petits côtés du corps principal (1) comprend une charnière (7) moulée dans la poignée secondaire (6) et dans le côté du corps principal (1).

3. Panier à provisions selon la revendication 1, **caractérisé en ce que** le couplage de la poignée secondaire (6) dans l'un des petits côtés du corps principal (1) comprend un élément de rotation pour la poignée dans différentes directions.

4. Panier à provisions selon la revendication 3, **caractérisé en ce que** l'élément de rotation de la poignée secondaire (6) dans différentes directions est choisi entre un joint articulé et un joint universel.

5. Panier à provisions selon la revendication 1, **caractérisé en ce que** le couplage de la poignée secondaire (6) dans l'un des petits côtés du corps principal (1) comprend une extension prévue dans l'un des petits côtés du corps principal (1) qui définit un évidement (9) grâce auquel elle se déplace, et dans lequel elle est logée avec la possibilité de tourner, un arbre de couplage (10) étant matérialisé dans une section de la véritable poignée secondaire (6).

6. Panier à provisions selon la revendication 5, **caractérisé en ce que** le couplage de la poignée secondaire (6) dans l'un des petits côtés du corps principal (1) comprend un couvercle (13) qui ferme l'évidement (9) pour retenir l'arbre de couplage (10) de la poignée secondaire (2).

7. Panier à provisions selon la revendication 6, **caractérisé en ce que** l'arbre de couplage (10) comprend au moins une patte (11, 12) complémentaire d'au moins une patte (14, 15) prévue dans le couvercle (13) pour limiter l'angle de pliage de la poignée secondaire (6) vers l'extérieur.

8. Panier à provisions selon la revendication 7, **caractérisé en ce qu'**au moins la patte (12) de l'arbre de couplage (10) et au moins la patte (14) correspondante du couvercle (13) sont positionnées dans une position qui limite le pliage de la poignée secondaire (6) dans une position oblique ; et de plus elles présentent une configuration dans laquelle, lorsque la poignée secondaire (6) est dans la position oblique, en exerçant une certaine force de pliage vers le bas, la patte (12) de l'arbre de couplage (10) dépasse la patte (14) du couvercle (13) afin de permettre à la poignée secondaire (6) de continuer à être pliée vers l'extérieur.

9. Panier à provisions selon les revendications 7 ou 8, **caractérisé en ce que** l'arbre de couplage (10) comprend deux pattes (11) positionnées en correspondance avec les deux pattes (15) prévues dans le couvercle (13) afin de définir une butée de pliage pour la poignée secondaire (6) vers l'extérieur dans une position approximativement horizontale.

10. Panier à provisions selon les revendications 5 à 10, **caractérisé en ce que** l'évidement (9) comprend des ouvertures séparées (17) dans ses petites faces par lesquelles l'arbre de couplage (10) s'étend et est guidé.

11. Panier à provisions selon la revendication 10, **caractérisé en ce que** l'évidement (9) comprend des nervures de renforcement transversales (18) prévues avec des ouvertures (19) positionnées en correspondance avec les ouvertures (17) des petites faces de l'évidement (9).

12. Panier à provisions selon la revendication 10, **caractérisé en ce que** le couvercle (13) est prévu avec au moins une nervure de guidage et de retenue (16) pour ledit arbre de couplage (10), complémentaire de certains éléments choisis parmi des ouvertures (17, 19) des faces latérales, des nervures de renforcement transversales (18) et leur combinaison.

13. Panier à provisions selon la revendication 12, **caractérisé en ce que** l'arbre de couplage (10) comprend au moins une saillie périmétrale (20) qui s'arrête contre un élément choisi parmi les pattes (14, 15) du couvercle (13), les nervures (16) du couvercle (13), l'évidement (9) et leur combinaison afin d'empêcher le déplacement longitudinal de l'arbre de couplage (10) dans l'évidement (9).

14. Panier à provisions selon l'une quelconque des revendications précédentes, **caractérisé en ce que** le périmètre de la poignée secondaire (6) a une plus grande longueur que le périmètre de l'ouverture du corps principal (1).

15. Panier à provisions selon la revendication 1, **caractérisé en ce que** la base (22) du corps principal (1) comprend une élévation centrale qui diminue et se réduit vers les parois latérales, afin de forcer les produits (21) contenus dans la base du corps principal à s'incliner et reposer contre les parois latérales, en les maintenant stables.

16. Panier à provisions selon la revendication 15, **caractérisé en ce que** l'élévation comprend un effet d'arc avec une courbure descendante vers les bords opposés de la base (22).

17. Panier à provisions selon la revendication 15, **caractérisé en ce que** l'élévation comprend une courbure en forme de dôme descendant vers les bords de cette base (22) dans son union avec les parois latérales.

18. Panier à provisions selon la revendication 15, **caractérisé en ce que** l'élévation comprend au moins deux plans inclinés en élévation convergeant vers une zone centrale de la base (22).

19. Panier à provisions selon la revendication 15, **caractérisé en ce que** l'élévation comprend une combinaison de deux courbures perpendiculaires entre elles qui descendent et se réduisent à partir d'une zone centrale de la base (22) vers ses parois latérales.
